# EUROPEAN PATENT APPLICATION

(11) **EP 4 123 367 A1**
(43) Date of publication of application: **25.01.2023**
(21) Application number: 21789529.1
(22) Date of filing: 13.04.2021
(51) Int. Cl.: G03B 5/00, G03B 17/12, H04N 5/225, H04N 5/232

(54) **CAMERA MODULE AND ELECTRONIC DEVICE COMPRISING SAME**

(30) Priority: 17.04.2020 KR 20200047038
(71) Applicant: Samsung Electronics Co., Ltd., Gyeonggi-do 16677 (KR)
(72) Inventor: BYON, Kwangseok, Suwon-si, Gyeonggi-do 16677 (KR); KANG, Byungkwon, Suwon-si, Gyeonggi-do 16677 (KR); YU, Hyunho, Suwon-si, Gyeonggi-do 16677 (KR)
(74) Representative: HGF
(86) International application number: PCT/KR2021/004635
(87) International publication number: WO 2021/210883

(57) **Abstract**

Disclosed is an electronic device including a housing including a surface, at least a portion of which faces a z-axis direction and a camera module disposed in the housing to receive external light through the surface of the housing. The camera module includes a camera housing and a camera assembly, at least a portion of which is disposed in the camera housing. The camera assembly is configured to rotate about a center of rotation formed therein and includes a plurality of lenses, a lens barrel that surrounds the plurality of lenses, and an image sensor. The camera module includes a default state in which an optical axis of the plurality of lenses is parallel to a z-axis and a rotated state in which the optical axis of the lenses forms a predetermined angle with the z-axis. The plurality of lenses include a first lens furthest from the center of rotation in a direction of the optical axis of the lenses. The first lens is formed such that at least a portion of a surface is located in a higher position than the lens barrel in the z-axis direction in the default state and the rotated state. Besides, it may be permissible to prepare various other embodiments speculated through the specification.

## Description

### [Technical Field]

Embodiments of the disclosure described herein relate to a camera module and an electronic device including the same.

### [Background Art]

An electronic device may include at least one camera module. The camera module may include an auto focus function of focusing a lens by moving the lens in a direction of an optical axis. The electronic device may include a function of compensating for shaking of the camera module. For example, to compensate for vibration applied to the camera module, the function of compensating for shake may allow the lens to move in a direction other than the direction of the optical axis.

### [Disclosure]

### [Technical Problem]

The camera module may support various functions. For example, the camera module may include at least one of a function related to image stabilization or a function related to auto focus.

For example, when the camera module performs the function related to the image stabilization, a camera assembly may rotate in a camera housing. The camera housing may include a space so as not to collide with the rotating camera assembly. However, the size of the camera module may be increased as the space is increased. This may be a problem in the mobile electronic device having a space limitation.

Embodiments of the disclosure provide a camera module including an auto focus function of moving a lens in a direction of an optical axis and/or a function of rotating the lens about at least two axes, and an electronic device including the camera module.

Embodiments of the disclosure provide a camera module including a camera housing optimized for a rotation range of a camera assembly.

### [Technical Solution]

A camera module according to an embodiment of the disclosure includes a camera housing and a camera assembly, at least a portion of which is disposed in the camera housing. The camera assembly is configured to rotate about a center of rotation formed therein and includes a lens, a lens barrel that surrounds the lens, and an image sensor. The camera module includes a default state in which an optical axis of the lens is parallel to a z-axis and a rotated state in which the optical axis of the lens forms a predetermined angle with the z-axis. The lens has a first height in a direction of the z-axis from the center of rotation in the default state. The lens barrel has a third height smaller than the first height in the direction of the z-axis from the center of rotation in the default state and the rotated state.

An electronic device according to an embodiment of the disclosure includes a housing including a surface, at least a portion of which faces a z-axis direction and a camera module disposed in the housing to receive external light through the surface of the housing. The camera module includes a camera housing and a camera assembly, at least a portion of which is disposed in the camera housing. The camera assembly is configured to rotate about a center of rotation formed therein and includes a plurality of lenses, a lens barrel that surrounds the plurality of lenses, and an image sensor. The camera module includes a default state in which an optical axis of the plurality of lenses is parallel to a z-axis and a rotated state in which the optical axis of the lenses forms a predetermined angle with the z-axis. The plurality of lenses include a first lens furthest from the center of rotation in a direction of the optical axis of the lenses. The first lens is formed such that at least a portion of a surface is located in a higher position than the lens barrel in the z-axis direction in the default state and the rotated state.

A camera module according to an embodiment of the disclosure includes a camera housing including an upper surface that has an opening formed therein and faces a z-axis and a lower surface that faces a -z-axis and a camera assembly, at least a portion of which is disposed in the camera housing, and the camera assembly includes a lens and a lens barrel that surrounds the lens. The lens and at least a portion of the lens barrel protrude through the opening formed in the upper surface. The camera module includes a default state in which an optical axis of the lens is parallel to the z-axis and a rotated state in which the optical axis of the lens forms a predetermined angel with the z-axis. The camera module has a first height from the lower surface to a surface of the lens in a direction of the z-axis in the default state. The camera module has a second height smaller than or equal to the first height in the direction of the z-axis from the lower surface in the rotated state.

### [Advantageous Effects]

According to the embodiments of the disclosure, the camera module may provide a function related to auto focus and a function related to image stabilization.

According to the embodiments of the disclosure, the size of the camera module may be reduced by changing the structure of the camera housing and/or the structure of the camera assembly.

In addition, the disclosure may provide various effects that are directly or indirectly recognized.

### [Description of Drawings]

Fig. 1 is a block diagram illustrating an electronic device 101 in a network environment 100 according to various embodiments.
Fig. 2 is a block diagram 200 illustrating the camera module 180 according to various embodiments.
FIG. 3A is a front perspective view of an electronic device according to an embodiment.
FIG. 3B is a rear perspective view of the electronic device according to an embodiment.
FIG. 3C is an exploded perspective view of the electronic device according to an embodiment.
FIG. 4 is a view illustrating a camera module according to an embodiment.
FIG. 5 is an exploded perspective view of the camera module according to an embodiment.
FIG. 6 is a view illustrating a second rotation operation of the camera module according to an embodiment.
FIG. 7 is a view illustrating a first rotation operation of the camera module according to an embodiment.
FIG. 8 is a perspective view of a camera assembly of the camera module according to an embodiment.
FIG. 9 is an exploded perspective view of the camera assembly of the camera module according to an embodiment.
FIG. 10 is a view illustrating rotation of the camera assembly of the camera module according to an embodiment.
FIG. 11 is a view illustrating rotation of the camera assembly of the camera module according to an embodiment.
FIG. 12 is a view illustrating a printed circuit board according to an embodiment.

With regard to description of the drawings, identical or similar reference numerals may be used to refer to identical or similar components.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

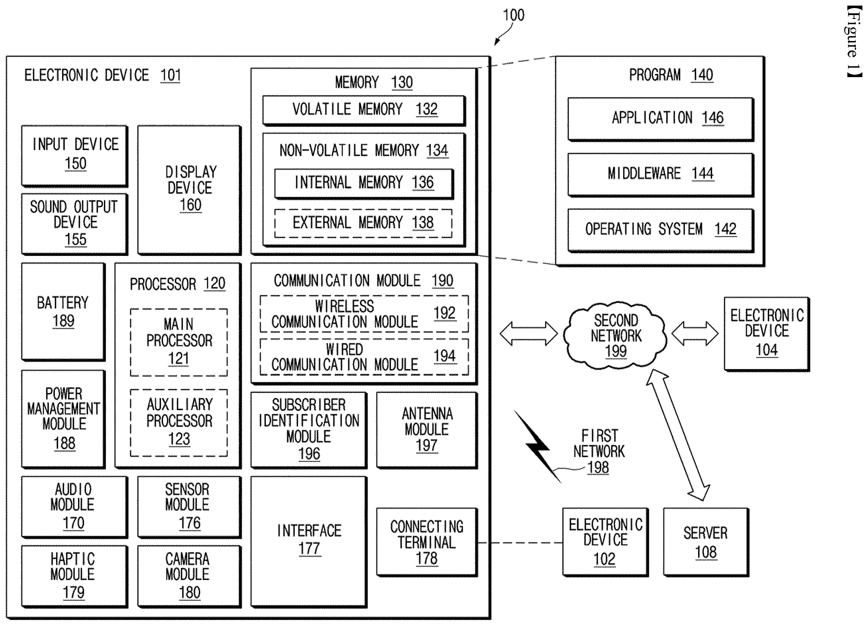

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

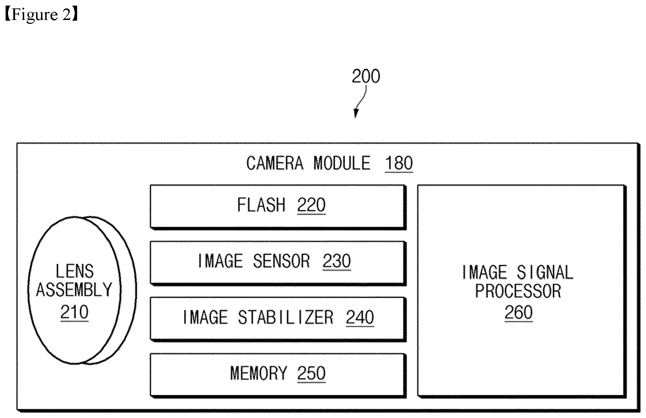

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

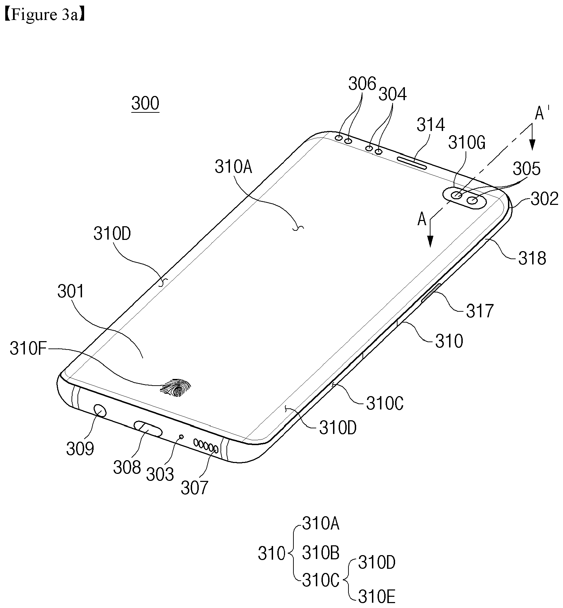

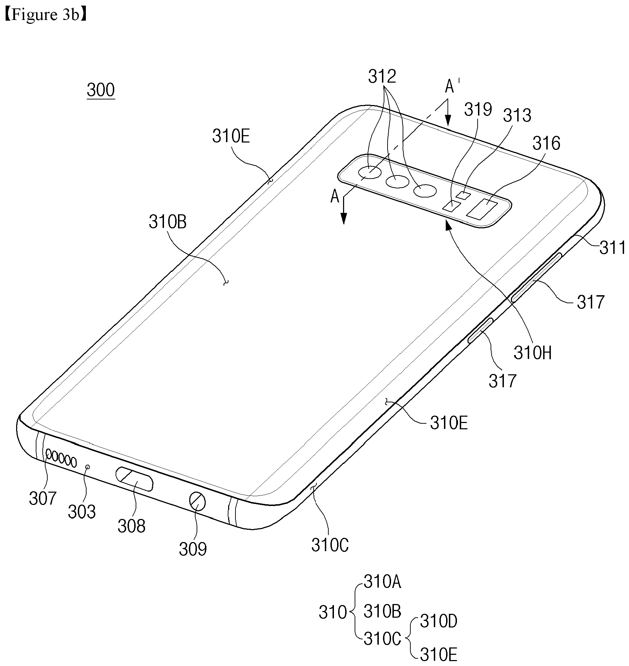

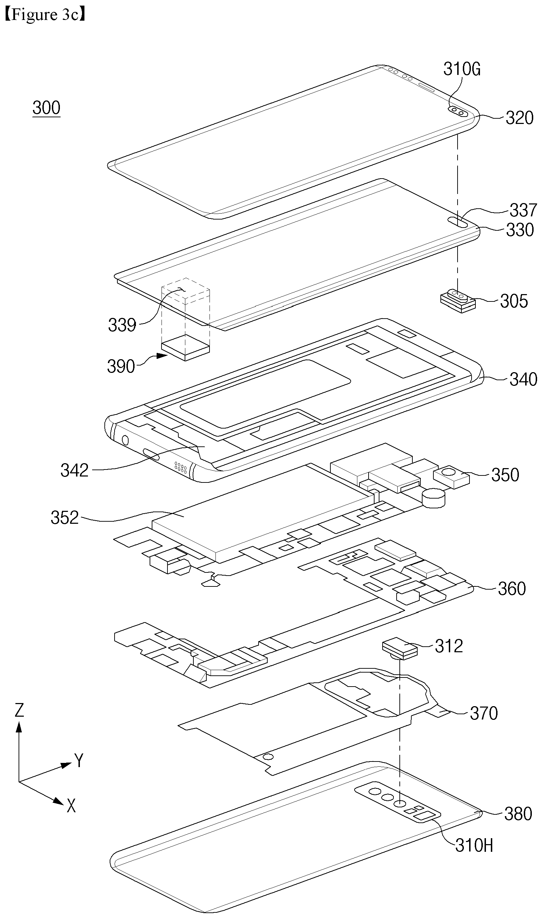

FIG. 3A is a front perspective view of an electronic device according to an embodiment. FIG. 3B is a rear perspective view of the electronic device according to an embodiment. FIG. 3C is an exploded perspective view of the electronic device according to an embodiment.

Referring to FIGS. 3A to 3C, the electronic device 300 according to an embodiment may include a housing 310 that includes a first surface (or, a front surface) 310A, a second surface (or, a rear surface) 310B, and a side surface 310C surrounding a space between the first surface 310A and the second surface 310B.

In another embodiment (not illustrated), the housing 310 may refer to a structure that forms a part of the first surface 310A, the second surface 310B, and the side surface 310C of FIG. 1.

According to an embodiment, the first surface 310A may be formed by a front plate 302, at least a portion of which is substantially transparent (e.g., a glass plate including various coating layers, or a polymer plate). The second surface 310B may be formed by a back plate 311 that is substantially opaque. The back plate 311 may be formed of, for example, coated or colored glass, ceramic, a polymer, metal (e.g., aluminum, stainless steel (STS), or magnesium), or a combination of at least two of the aforementioned materials. The side surface 310C may be formed by a side bezel structure (or, a "frame structure") 318 that is coupled with the front plate 302 and the back plate 311 and that includes metal and/or a polymer.

In some embodiments, the back plate 311 and the side bezel structure 318 may be integrally formed with each other and may include the same material (e.g., a metallic material such as aluminum).

In the illustrated embodiment, the front plate 302 may include, at opposite long edges thereof, two first regions 310D that curvedly and seamlessly extend from the first surface 310A toward the back plate 311.

In the illustrated embodiment (refer to FIG. 2), the back plate 311 may include, at opposite long edges thereof, two second regions 310E that curvedly and seamlessly extend from the second surface 310B toward the front plate 302.

In some embodiments, the front plate 302 (or, the back plate 311) may include only one of the first regions 310D (or, the second regions 310E). In another embodiment, the front plate 302 (or, the back plate 311) may not include a part of the first regions 310D (or, the second regions 310E).

In the embodiments, when viewed from a side of the electronic device 300, the side bezel structure 318 may have a first thickness (or, width) at sides (e.g., short sides) not including the first regions 310D or the second regions 310E and may have a second thickness at sides (e.g., long sides) including the first regions 310D or the second regions 310E, the second thickness being smaller than the first thickness.

According to an embodiment, the electronic device 300 may include at least one of a display 301, audio modules 303, 307, and 314 (e.g., the audio module 170 of FIG. 1), sensor modules 304, 316, and 319 (e.g., the sensor module 176 of FIG. 1), camera modules 305 and 312 (e.g., the camera module 180 of FIG. 1), key input devices 317 (e.g., the input device 150 of FIG. 1), a light emitting element 306, or connector holes 308 and 309 (e.g., the connecting terminal 178 of FIG. 1). In some embodiments, the electronic device 300 may not include at least one component (e.g., the key input devices 317 or the light emitting elements 306) among the aforementioned components, or may additionally include other component(s).

The display 301, for example, may be exposed through most of the front plate 302. In some embodiments, at least a portion of the display 301 may be exposed through the front plate 302 that includes the first surface 310A and the first regions 310D of the side surface 310C.

In some embodiments, the periphery of the display 301 may be formed to be substantially the same as the shape of the adjacent outside edge of the front plate 302. In another embodiment (not illustrated), to expand the area by which the display 301 is exposed, the gap between the outside edge of the display 301 and the outside edge of the front plate 302 may be formed to be substantially constant.

In an embodiment, a surface of the housing 310 (or, the front plate 302) may include a screen display area that is formed as the display 301 is visually exposed. For example, the screen display area may include the first surface 310A and the first regions 310D of the side surface.

In an embodiment, the screen display area 310A and 310D may include a sensing region 310F configured to obtain biometric information of a user. Here, when the screen display area 310A and 310D includes the sensing region 310F, this may mean that at least a portion of the sensing region 310A overlaps the screen display area 310A and 310D. For example, the sensing region 310F may refer to a region capable of displaying visual information by the display 301 like the other regions of the screen display area 310A and 310D and additionally obtaining the user's biometric information (e.g., fingerprint).

In an embodiment, the screen display area 310A and 310D of the display 301 may include a region 310G through which the first camera module 305 (e.g., a punch hole camera) is visually exposed. For example, at least a portion of the periphery of the region 310G through which the first camera module 305 is exposed may be surrounded by the screen display area 310A and 310D. In various embodiments, the first camera module 305 may include a plurality of camera modules (e.g., the camera module 180 of FIG. 1).

In another embodiment (not illustrated), a recess or opening may be formed in a portion of the screen display area 310A and 310D of the display 301, and the electronic device 300 may include at least one of the audio module 314, the first sensor module 304, or the light emitting element 306 that is aligned with the recess or opening.

In another embodiment (not illustrated), the display 301 may include, on a rear surface of the screen display area 310A and 310D, at least one of the audio module 314, the sensor modules 304, 316, and 319, or the light emitting element 306.

In another embodiment (not illustrated), the display 301 may be coupled with, or disposed adjacent to, touch detection circuitry, a pressure sensor capable of measuring the intensity (pressure) of a touch, and/or a digitizer that detects a stylus pen of a magnetic field type.

In some embodiments, at least a part of the sensor modules 304, 316, and 319 and/or at least a part of the key input devices 317 may be disposed on the side surface 310C (e.g., the first regions 310D and/or the second regions 310E).

The audio modules 303, 307, and 314 may include the microphone hole 303 and the speaker holes 307 and 314. A microphone for obtaining external sound may be disposed in the microphone hole 303, and in some embodiments, a plurality of microphones may be disposed in the microphone hole 303 to sense the direction of sound. The speaker holes 307 and 314 may include the external speaker hole 307 and the receiver hole 314 for telephone call. In some embodiments, the speaker holes 307 and 314 and the microphone hole 303 may be implemented as a single hole, or without the speaker holes 307 and 314, a speaker may be included (e.g., a piezoelectric speaker).

The sensor modules 304, 316, and 319 may generate an electrical signal or a data value that corresponds to an operational state inside the electronic device 300 or an environmental state external to the electronic device 300. For example, the sensor modules 304, 316, and 319 may include the first sensor module 304 (e.g., a proximity sensor) disposed on the first surface 310A of the housing 310, the second sensor module 316 (e.g., a TOF camera) disposed on the second surface 310B of the housing 310, the third sensor module 319 (e.g., an HRM sensor) disposed on the second surface 310B of the housing 310, and/or a fourth sensor module 390 (e.g., a fingerprint sensor) coupled to the display 301.

In various embodiments, the second sensor module 316 may include a TOF camera for measuring a distance.

In various embodiments, at least a portion of the fourth sensor module 390 may be disposed under the screen display area 310A and 310D. For example, the fourth sensor module may be disposed in a recess 339 formed on a rear surface of the display 301. For example, the fourth sensor module 390 may not be exposed through the screen display area 310A and 310D and may form the sensing region 310F in at least a portion of the screen display area 310A and 310D. In some embodiments (not illustrated), the fingerprint sensor may be disposed on the second surface 310B as well as the first surface 310A of the housing 310 (e.g., the screen display area 310A and 310D).

In various embodiments, the electronic device 300 may further include a non-illustrated sensor module, for example, at least one of a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor.

The camera modules 305 and 312 may include the first camera module 305 (e.g., a punch hole camera) exposed on the first surface 310A of the electronic device 300, the second camera module 312 exposed on the second surface 310B, and/or a flash 313.

In an embodiment, the first camera device 305 may be exposed through a portion of the screen display area 310D of the first surface 310A. For example, the first camera module 305 may be exposed on a partial region of the screen display area 310D through an opening (not illustrated) that is formed in a portion of the display 301.

In an embodiment, the second camera module 312 may include a plurality of camera modules (e.g., a dual camera or a triple camera). However, the second camera module 312 is not necessarily limited to including the plurality of camera modules and may include one camera module.

The camera modules 305 and 312 may include one or more lenses, an image sensor, and/or an image signal processor. The flash 313 may include, for example, a light emitting diode or a xenon lamp. In some embodiments, two or more lenses (an IR camera lens, a wide angle lens, and a telephoto lens) and image sensors may be disposed on one surface of the electronic device 300.

The key input devices 317 may be disposed on the side surface 310C of the housing 310. In another embodiment, the electronic device 300 may not include all or some of the aforementioned key input devices 317, and the key input devices 317 not included may be implemented in a different form, such as a soft key, on the display 301. In some embodiments, the key input devices may include a sensor module (e.g., the fourth sensor 390) that forms the sensing region 310F included in the screen display area 310A and 310D.

The light emitting element 306, for example, may be disposed on the first surface 310A of the housing 310. The light emitting element 306, for example, may provide state information of the electronic device 300 in the form of light. In another embodiment, the light emitting element 306 may provide, for example, a light source that operates in conjunction with operation of the first camera module 305. The light emitting element 306 may include, for example, an LED, an IR LED, and/or a xenon lamp.

The connector holes 308 and 309 may include the first connector hole 308 capable of accommodating a connector (e.g., a USB connector) for transmitting and receiving power and/or data with an external electronic device, and/or the second connector hole 309 (e.g., an earphone jack) capable of accommodating a connector for transmitting and receiving audio signals with an external electronic device.

Referring to FIG. 3C, the electronic device 300 may include a front plate 320 (e.g., the front surface 310A and the first regions 310D of FIG. 3A), a display 330 (e.g., the display 301 of FIG. 3A), a bracket 340 (e.g., a portion of the side surface 310C of FIG. 3A), a first support member 342 (e.g., a plate structure), a printed circuit board 350 (e.g., a PCB), a battery 352, a rear case 360, an antenna 370, and a back plate 380 (e.g., the rear surface 310B and the second regions 310E of FIG. 3A).

In some embodiments, the electronic device 300 may not include at least one component (e.g., the first support member 342 or the rear case 360) among the components, or may additionally include other component(s). At least one of the components of the electronic device 300 may be the same as, or similar to, at least one of the components of the electronic device 300 of FIG. 3A or 3B, and repetitive descriptions will hereinafter be omitted.

The first support member 342 may be disposed in the electronic device 300 and may be connected with the bracket 340, or may be integrally formed with the bracket 340. The first support member 342 may be formed of, for example, a metallic material and/or a nonmetallic (e.g., polymer) material. The display 330 may be coupled to one surface of the first support member 342, and the printed circuit board 350 may be coupled to an opposite surface of the first support member 342. The printed circuit board 350 may have a processor, a memory, and/or an interface mounted thereon. The processor may include, for example, one or more of a central processing unit, an application processor, a graphic processing unit, an image signal processor, a sensor hub processor, or a communication processor.

The memory may include, for example, a volatile memory or a nonvolatile memory.

The interface may include, for example, a high definition multimedia interface (HDMI), a universal serial bus (USB) interface, an SD card interface, and/or an audio interface. For example, the interface may electrically or physically connect the electronic device 300 with an external electronic device and may include a USB connector, an SD card/MMC connector, or an audio connector.

The battery 352, which is a device for supplying power to at least one component of the electronic device 300, may include, for example, a primary cell that is not rechargeable, a secondary cell that is rechargeable, or a fuel cell. At least a portion of the battery 352, for example, may be disposed on substantially the same plane as the printed circuit board 350. The battery 352 may be integrally disposed inside the electronic device 300, or may be disposed to be detachable from the electronic device 300.

The antenna 370 may be disposed between the back plate 380 and the battery 352. The antenna 370 may include, for example, a near field communication (NFC) antenna, a wireless charging antenna, and/or a magnetic secure transmission (MST) antenna. For example, the antenna 370 may perform short range communication with an external device, or may wirelessly transmit and receive power required for charging. In another embodiment, an antenna structure may be formed by the bracket 340 and/or a portion of the first support member 342, or a combination thereof.

In various embodiments, the camera module 305 may be disposed in the housing 310 such that a lens is exposed through the camera region 310G of the front surface 310A of the electronic device 300. For example, the camera region 310G may be formed on the first plate 320. For example, the camera module 305 may include a punch hole camera disposed in a hole or recess 337 formed on a rear surface of the display 330.

In various embodiments, the camera module 312 may be disposed in the housing 310 such that a lens is exposed through a camera region 310H of the rear surface 310B of the electronic device 300. For example, the camera module 312 may be disposed on the printed circuit board 350.

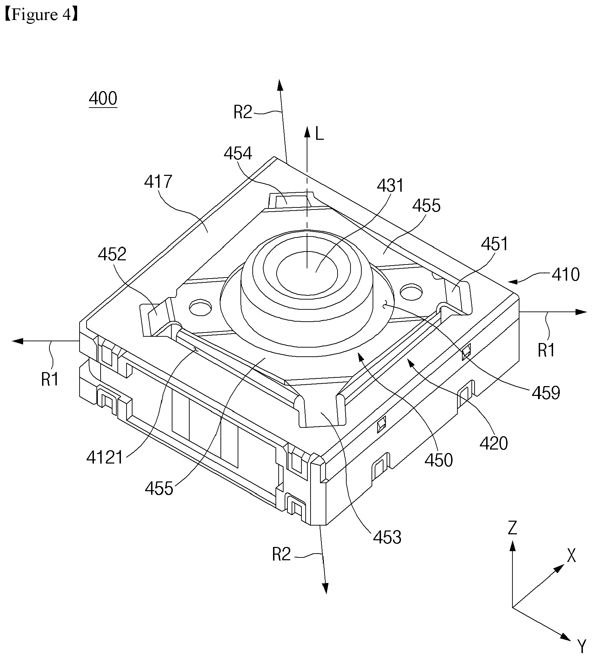

FIG. 4 is a view illustrating a camera module according to an embodiment.

Referring to FIG. 4, the camera module 400 (e.g., the camera modules 305 and 312 of FIGS. 3A to 3C) may include a first camera housing 410, a camera assembly 420, at least a portion of which is surrounded by the first camera housing 410, and a guide plate 450 connected to the first camera housing 410 and the camera assembly 420.

In the illustrated embodiment, a first rotational axis R1 and a second rotational axis R2 substantially perpendicular to an optical axis L of a lens 431 (e.g., the lens assembly 210 of FIG. 2) may be defined. In this case, the first rotational axis R1 and the second rotational axis R2 may be substantially perpendicular to each other.

In an embodiment, at least a portion of the camera assembly 420 may be disposed in the first camera housing 410. The first camera housing 410 may include a first cover 417 substantially facing the Z-axis direction. An opening region 4121 may be formed in the first cover 417. At least a portion of the camera assembly 420 may be disposed in the opening region 4121 of the first cover 417.

In an embodiment, the guide plate 450 may include a central portion 455 including an opening region 459, a first portion 451 and a second portion 452 that extend from the central portion 455 in the direction of the first rotational axis R1, and a third portion 453 and a fourth portion 454 that extend from the central portion 455 in the direction of the second rotational axis R2. In an embodiment, the first portion 451 and the second portion 452 may be connected to the camera assembly 420, and the third portion 453 and the fourth portion 454 may be connected to the first camera housing 410.

In an embodiment, the camera assembly 420 may be configured to be rotatable about the first rotational axis R1 and/or the second rotational axis R2. For example, the camera assembly 420 may rotate relative to the first camera housing 410. Accordingly, the camera module 400 may perform an image stabilization function. For example, the camera module 400 may perform a shake compensation function (e.g., an image stabilization function) by rotating the camera assembly 420 about the first rotational axis R1 and/or the second rotational axis R2. In an embodiment, the first rotational axis R1 may be substantially perpendicular to the optical axis L of the lens 431 and may extend to intersect the optical axis L of the lens 431 at one point. The second rotational axis R2 may be substantially perpendicular to the optical axis L of the lens 431 and may extend to intersect the optical axis L of the lens 431 at one point. For example, the first rotational axis R1 and the second rotational axis R2 may meet each other at one point through which the optical axis L of the lens 431 passes. In this case, the one point may be defined as the center of rotation (not illustrated) of the camera assembly 420.

In an embodiment, the camera assembly 420 may rotate about the first rotational axis R1 and/or the second rotational axis R2 such that the optical axis L of the lens 431 has a predetermined range (e.g., movement range) with respect to the Z-axis.

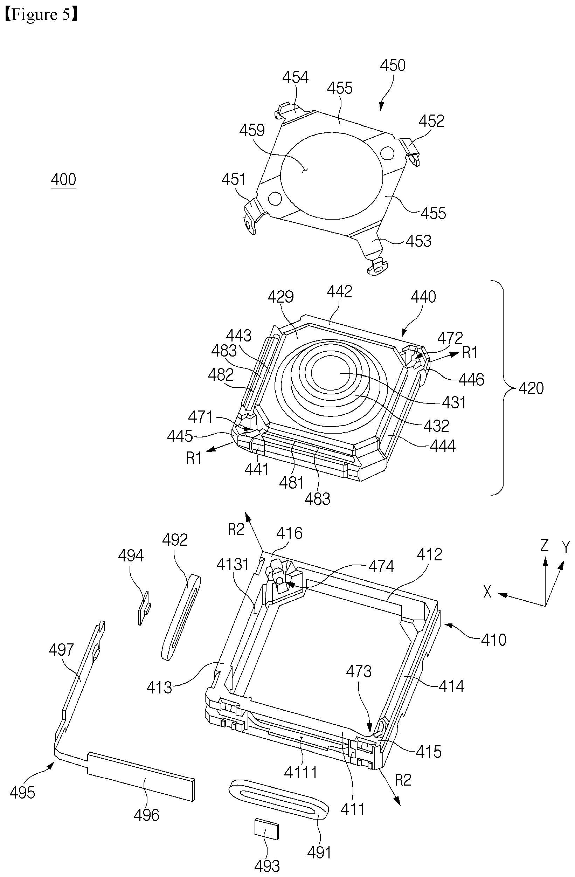

FIG. 5 is an exploded perspective view of the camera module according to an embodiment.

Referring to FIG. 5, the camera module 400 may include the first camera housing 410, the camera assembly 420, and the guide plate 450.

In an embodiment, the camera module 400 may include the first camera housing 410, a frame structure 411, 412, 413, and 414, a third support structure 473 and a fourth support structure 474 connected with the guide plate 450, and coils 491 and 492. In an embodiment, the frame structure 411, 412, 413, and 414 may form a space in which the camera assembly 420 is disposed.

In an embodiment, the frame structure 411, 412, 413, and 414 may include the first frame structure 411 and the second frame structure 412 that face each other and the third frame structure 413 and the fourth frame structure 414 that face each other. The first frame structure 411 and the second frame structure 412 may be connected by the third frame structure 413 and the fourth frame structure 414. For example, the first frame structure 411 and the second frame structure 412 may extend in the X-axis direction. For example, the third frame structure 413 and the fourth frame structure 414 may extend in the Y-axis direction. In the illustrated embodiment, the first frame structure 411 may be disposed in the -Y-axis direction from the second frame structure 412. The third frame structure 413 may be disposed in the +X-axis direction from the fourth frame structure 414.

In an embodiment, the first coil 491 and a first sensor 493 may be disposed in the first frame structure 411. For example, the first frame structure 411 may have a first opening region 4111 formed therein in which the first coil 491 is disposed. In an embodiment, the first coil 491 may be disposed to substantially face a first magnetic body 481 included in the camera assembly 420. In an embodiment, the first sensor 493 may be disposed adjacent to the first magnetic body 481 to sense the position of the first magnetic body 481. For example, the first sensor 493 may sense a rotation angle of the camera assembly 420. For example, the first sensor 493 may be disposed in the first opening region 4111. In various embodiments, the first sensor 493 may include a Hall sensor.

In an embodiment, the second coil 492 and a second sensor 494 may be disposed in the third frame structure 413. For example, the third frame structure 413 may have a second opening region 4131 formed therein in which the second coil 492 is disposed. In an embodiment, the second coil 492 may be disposed to substantially face a second magnetic body 482 included in the camera assembly 420. In an embodiment, the second sensor 494 may be disposed adjacent to the second magnetic body 482 to sense the position of the second magnetic body 482. For example, the second sensor 494 may sense a rotation angle of the camera assembly 420. For example, the second sensor 494 may be disposed in the second opening region 4131. In various embodiments, the second sensor 494 may include a Hall sensor.

In an embodiment, the first sensor 493 and/or the second sensor 494 may sense a rotation angle (e.g., a movement range) at which the camera assembly 420 moves with respect to the rotational axes R1 and R2. For example, an electronic device (e.g., the processor 120 of FIG. 1 or the image signal processor 260 of FIG. 2) may perform a shake compensation function (e.g., an image stabilization function) of the camera module 400, based on the rotation angle identified by using the first sensor 493 and/or the second sensor 494.

In an embodiment, the third support structure 473 may be formed on a third corner portion 415 formed by the first frame structure 411 and the fourth frame structure 414. The fourth support structure 474 may be formed on a fourth corner portion 416 formed by the second frame structure 412 and the third frame structure 413. For example, the third corner portion 415 may be formed at the portion where the first frame structure 411 and the fourth frame structure 414 are connected. For example, the fourth corner portion 416 may be formed at the portion where the second frame structure 412 and the third frame structure 413 are connected. In the illustrated embodiment, the third corner portion 415 and the fourth corner portion 416 may substantially face each other in the direction of the second rotational axis R2.

In an embodiment, the position of the third support structure 473 and/or the position of the fourth support structure 474 is not limited to the illustrated embodiment, and according to various embodiments, the position of the third support structure 473 and/or the position of the fourth support structure 474 may be changed. For example, the third support structure 473 and the fourth support structure 474 are illustrated as substantially facing each other in the direction of the second rotational axis R2. However, in another example, the third support structure 473 and the fourth support structure 474 may be disposed to face each other in the direction of the first rotational axis R1. For example, the third support structure 473 may be formed on a corner portion formed by the first frame structure 411 and the third frame structure 413, and the fourth support structure 474 may be formed on a corner portion formed by the second frame structure 412 and the fourth frame structure 414.

In an embodiment, the third portion 453 of the guide plate 450 may be coupled to the third support structure 473 such that the guide plate 450 is rotatable about the second rotational axis R2. In an embodiment, the third support structure 473 may be coupled to the guide plate 450 in the direction of the second rotational axis R2 substantially perpendicular to the first rotational axis R1 such that the guide plate 450 is fixed when the camera assembly 420 rotates about the first rotational axis R1.

In an embodiment, the fourth portion 454 of the guide plate 450 may be coupled to the fourth support structure 474 such that the guide plate 450 is rotatable about the second rotational axis R2. In an embodiment, the fourth support structure 474 may be coupled to the guide plate 450 in the direction of the second rotational axis R2 substantially perpendicular to the first rotational axis R1 such that the guide plate 450 is fixed when the camera assembly 420 rotates about the first rotational axis R1.

In an embodiment, the camera module 400 may include a connecting member 495 surrounding at least a portion of the first camera housing 410. For example, the connecting member 495 may include a first region 496 on which the first coil 491 is disposed and a second region 497 on which the second coil 492 is disposed.

In the illustrated embodiment, the connecting member 495 may be coupled to the first camera housing 410 such that the first region 496 is disposed on the first frame structure 411 and the second region 497 is disposed on the second frame structure 412. For example, the first region 496 may be disposed on the first frame structure 411 such that the first coil 491 is aligned with the first opening region 4111. For example, the second region 497 may be disposed on the second frame structure 412 such that the second coil 492 is aligned with the second opening region 4131. In various embodiments, the first sensor 493 may be disposed on the first region 496, and the second sensor 494 may be disposed on the second region 497. In various embodiments, the connecting member 495 may include a PCB or an FPCB.

In an embodiment, the camera assembly 420 may include a second camera housing 429 in which the lens 431, a lens barrel 432, and an image sensor (e.g., the image sensor 230 of FIG. 2) are disposed, a holder 440 surrounding the second camera housing 429, and a first support structure 471 and a second support structure 472 connected to the guide plate 450.

In an embodiment, the lens 431 protruding in the direction of the optical axis (e.g., the Z-axis direction) and the lens barrel 432 surrounding the lens 431 may be disposed in the second camera housing 429. The image sensor (e.g., the image sensor 230 of FIG. 2) disposed in the direction of the optical axis (e.g., the Z-axis direction) from the lens 431 may be disposed in the second camera housing 429. The image sensor may be configured to convert light incident from the lens 431 into an electrical signal.

In an embodiment, the holder 440 may include a first sidewall 441 and a second sidewall 442 that face each other and a third sidewall 443 and a fourth sidewall 444 that face each other. The first sidewall 441 and the second sidewall 442 may be connected by the third sidewall 443 and the fourth sidewall 444. For example, the first sidewall 441 and the second sidewall 442 may extend in the X-axis direction. For example, the third sidewall 443 and the fourth sidewall 444 may extend in the Y-axis direction. In the illustrated embodiment, the first sidewall 441 may be disposed in the -Y-axis direction from the second sidewall 442. The third sidewall 443 may be disposed in the +X-axis direction from the fourth sidewall 444.

In an embodiment, the holder 440 may face the frame structure 411, 412, 413, and 414 of the first camera housing 410. For example, the first sidewall 441 may face the first frame structure 411 of the first camera housing 410. The second sidewall 442 may face the second frame structure 412 of the first camera housing 410. The third sidewall 443 may face the third frame structure 413 of the first camera housing 410. The fourth sidewall 444 may face the fourth frame structure 414 of the first camera housing 410.

In an embodiment, the camera assembly 420 may include the first magnetic body 481, the second magnetic body 482, and yoke members 483. In an embodiment, the first magnetic body 481 may be disposed on the first sidewall 441 to substantially face the first coil 491. The first magnetic body 481 may be disposed adjacent to the first sensor 493. In an embodiment, the second magnetic body 482 may be disposed on the third sidewall 443 to substantially face the second coil 492. The second magnetic body 482 may be disposed adjacent to the second sensor 494.

In an embodiment, the yoke members 483 may be disposed between the first sidewall 441 and the first magnetic body 481 and between the second sidewall 442 and the second magnetic body 482. In various embodiments, the yoke members 483 may be formed of a magnetic material and may be disposed between the second camera housing 429 and the magnetic bodies 481 and 482 such that magnetic fields formed from the first magnetic body 481 and the second magnetic body 482 do not pass through the inside of the camera assembly 420.

In an embodiment, the first support structure 471 may be formed on a first corner portion 445 formed by the first sidewall 441 and the third sidewall 443. The second support structure 472 may be formed on a second corner portion 446 formed by the second sidewall 442 and the fourth sidewall 444. For example, the first corner portion 445 may be formed at the portion where the first sidewall 441 and the third sidewall 443 are connected. For example, the second corner portion 446 may be formed at the portion where the second sidewall 442 and the fourth sidewall 444 are connected. In the illustrated embodiment, the first corner portion 445 and the second corner portion 446 may substantially face each other in the direction of the first rotational axis R1.

In an embodiment, the position of the first support structure 471 and/or the position of the second support structure 472 is not limited to the illustrated embodiment, and according to various embodiments, the position of the first support structure 471 and/or the position of the second support structure 472 may be changed. For example, the first support structure 471 and the second support structure 472 are illustrated as substantially facing each other in the direction of the first rotational axis R1. However, the first support structure 471 and the second support structure 472 may be disposed to face each other in the direction of the second rotational axis R2. For example, the first support structure 471 may be formed on a corner portion formed by the first sidewall 441 and the fourth sidewall 444, and the second support structure 472 may be formed on a corner portion formed by the second sidewall 442 and the third sidewall 443.

In an embodiment, the first portion 451 of the guide plate 450 may be connected to the first support structure 471. In an embodiment, the first support structure 471 may be coupled with the guide plate 450 in the direction of the first rotational axis R1 such that the camera assembly 420 and the guide plate 450 rotate together when the camera assembly 420 rotates about the second rotational axis R2.

In an embodiment, the second portion 452 of the guide plate 450 may be connected to the second support structure 472. In an embodiment, the second support structure 472 may be coupled with the guide plate 450 in the direction of the first rotational axis R1 such that the camera assembly 420 and the guide plate 450 rotate together when the camera assembly 420 rotates about the second rotational axis R2.

In embodiments of the disclosure, the first coil 491 and the second coil 492 are not necessarily limited to being disposed on the one connecting member 495. For example, the first coil 491 and the second coil 492 may be disposed on separate connecting members 495, respectively.

In embodiments of the disclosure, the first coil 491 and the second coil 492 are not limited to the positions illustrated in the drawing. For example, the first coil 491 may be disposed on one of frame structures (e.g., the first frame structure 411 and the second frame structure 412) extending in the X-axis direction, and the second coil 492 may be disposed on one of frame structures (e.g., the third frame structure 413 and the fourth frame structure 414) extending in the Y-axis direction.

In another embodiment, the first coil 491 and the second coil 492 may be disposed on the camera assembly 420, and the first magnetic body 481 and the second magnetic body 482 may be disposed in the first camera housing 410 to substantially face the first coil 491 and the second coil 492, respectively.

In an embodiment, the guide plate 450 may include the central portion 455 including the opening region 459, the first portion 451 and the second portion 452 that extend from the central portion 455 in the direction of the first rotational axis R1, and the third portion 453 and the fourth portion 454 that extend from the central portion 455 in the direction of the second rotational axis R2.

In various embodiments, the guide plate 450 may be formed of a substantially quadrilateral plate having the opening region 459 formed in the central portion 455 thereof and may include the first portion 451 and the second portion 452 that extend from vertex portions of the quadrilateral plate in the direction of the first rotational axis R1 and the third portion 453 and the fourth portion 454 that extend from vertex portions of the quadrilateral plate in the direction of the second rotational axis R2.

In an embodiment, the first portion 451 of the guide plate 450 may be coupled to the first support structure 471 of the camera assembly 420, and the second portion 452 of the guide plate 450 may be coupled to the second support structure 472 of the camera assembly 420. In an embodiment, the third portion 453 of the guide plate 453 may be coupled to the third support structure 473 of the first camera housing 410, and the fourth portion 454 of the guide plate 450 may be coupled to the fourth support structure 474 of the first camera housing 410.

In various embodiments, the guide plate 450 may be fixed to the first camera housing 410 by the third support structure 473 and the fourth support structure 474 when the camera assembly 420 rotates about the first rotational axis R1. At this time, the distances between the camera assembly 420 and the third portion 453 and the fourth portion 454 of the guide plate 450 may be changed. For example, the third portion 453 of the guide plate 450 may move toward the camera assembly 420, and the fourth portion 454 of the guide plate 450 may move away from the camera assembly 420. In various embodiments, the guide plate 450, together with the camera assembly 420, may rotate about the second rotational axis R2.

In an embodiment, the structure of the guide plate 450 may be changed based on the camera assembly 420 and/or the first camera housing 410 connected to the guide plate 450. For example, when the first portion 451 and the second portion 452 are connected to the first camera housing 410 and the third portion 453 and the fourth portion 454 are connected to the camera assembly 420, the guide plate 450 may be formed to be different from the structure of the guide plate 450 illustrated in FIG. 5.

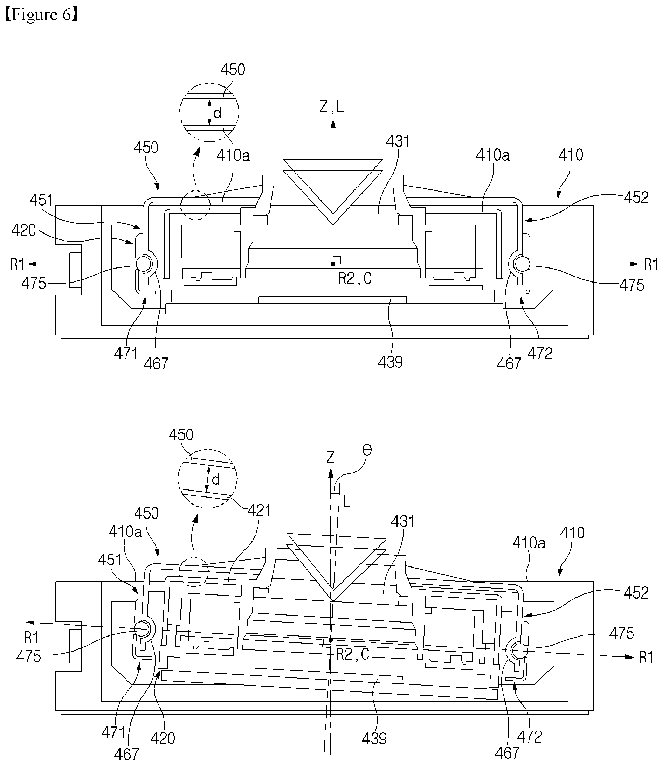

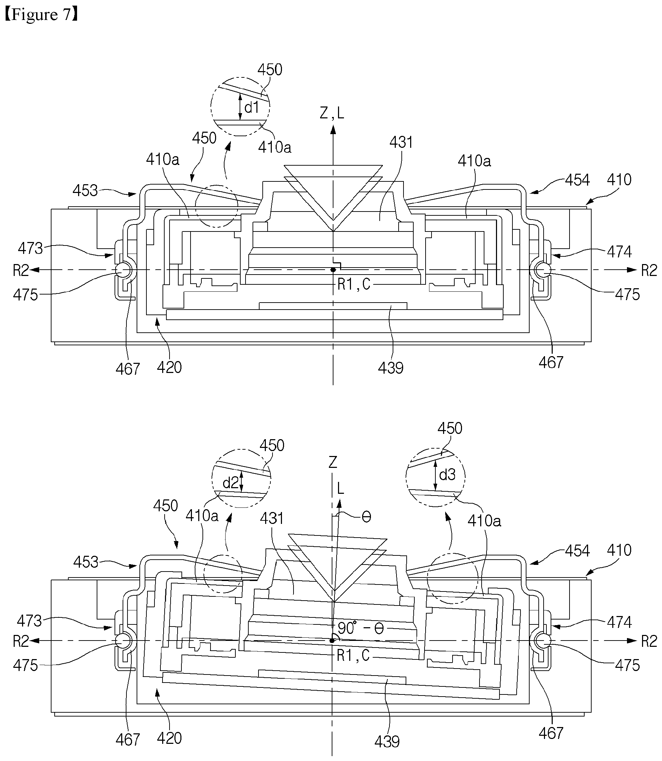

FIG. 6 is a view illustrating a second rotation operation of the camera module according to an embodiment. FIG. 7 is a view illustrating a first rotation operation of the camera module according to an embodiment.

In an embodiment, the camera module 400 may perform the first rotation operation about the first rotational axis R1 and the second rotation operation about the second rotational axis R2. In various embodiments, the camera module 400 may simultaneously or sequentially perform the first rotation operation and the second rotation operation. When the camera module 400 simultaneously performs the first rotation operation and the second rotation operation, it may be understood that the camera assembly 420 rotates about the center of rotation thereof.

In an embodiment, the camera module 400 may include the first camera housing 410 including the third support structure 473 and the fourth support structure 474, the lens 431, the image sensor 439, the camera assembly 420 including the first support structure 471 and the second support structure 472, and the guide plate 450 coupled to the first support structure 471, the second support structure 472, the third support structure 473, and the fourth support structure 474. The guide plate 450 may include the first portion 451, the second portion 452, the third portion 453, and the fourth portion 454 that are coupled with the support structures 471, 472, 473, and 474, respectively. For example, protruding portions 475 may be formed on the support structures 471, 472, 473, and 474, respectively, and receiving portions 467 in which the protruding portions 475 are accommodated may be formed on the respective portions 451, 452, 453, and 454 of the guide plate 450.

Referring to FIG. 6, the camera assembly 420 may rotate about the second rotational axis R2. In the second rotation operation, the camera assembly 420 may rotate together with the guide plate 450. At this time, at least part of the first portion 451 of the guide plate 450 may protrude above an upper surface 410a of the first camera housing 410. Furthermore, according to an embodiment, at least part of the second portion 452 of the guide plate 450 may protrude above the upper surface 410a of the first camera housing 410.

According to an embodiment, in the second rotation operation, the first rotational axis R1 may extend substantially perpendicular to the optical axis L of the lens 431. For example, in a default state, the second rotational axis R2 may form a substantially right angle (e.g., 90 degrees) with the optical axis L of the lens 431, and the first rotational axis R1 may remain at 90 degrees with respect to the optical axis L of the lens 431.

In various embodiments, when the second rotation operation is performed, the optical axis L of the lens 431 may be spaced apart from the Z-axis direction by a predetermined angle θ. Here, the Z-axis may be the optical axis L of the lens 431 in the state in which the camera assembly 420 is not rotated. In various embodiments, the angle θ may be greater than or equal to 0 degrees and smaller than 10 degrees.

Referring to FIG. 6, when the camera assembly 420 rotates about the second rotational axis R2, the gap d between the first guide plate 450 and the camera assembly 420 may be substantially the same.

Referring to FIG. 7, the camera assembly 420 may rotate about the first rotational axis R1. In the first rotation operation, the camera assembly 420 may rotate relative to the guide plate 450. For example, the guide plate 450 may be fixed to the first camera housing 410, and only the camera assembly 420 may rotate about the first rotational axis R1. Referring to FIG. 7, the guide plate 450 may remain in substantially the same state irrespective of the rotation of the camera assembly 420.

According to an embodiment, in the first rotation operation, the second rotational axis R2 may form a predetermined angle other than 90 degrees with respect to the optical axis L of the lens 431. For example, the first rotational axis R1 and the optical axis L of the lens 431 may form a substantially right angle (e.g., 90 degrees), and as the first rotation operation is performed, the second rotational axis R2 and the optical axis L of the lens 431 may form an angle (e.g., 90-θ) other than 90 degrees. At this time, the optical axis L of the lens 431 may be spaced apart from the Z-axis direction by the predetermined angle θ. In various embodiments, the Z-axis may be the optical axis L of the lens 431 in the state in which the camera assembly 420 is not rotated. In various embodiments, the angle θ may be greater than or equal to 0 degrees and smaller than 10 degrees.

Referring to FIG. 7, when the camera assembly 420 rotates about the first rotational axis R1, gaps d1, d2, and d3 between the guide plate 450 and the camera assembly 420 may differ from one another. For example, in the state in which the camera assembly 420 is not rotated, the guide plate 450 and the camera assembly 420 may have the first gap d1. In the state in which the camera assembly 420 is rotated, the guide plate 450 and the camera assembly 420 may have the second gap d2 and the third gap d3 that are different from the first gap d1. In the illustrated embodiment, the third portion 453 of the guide plate 450 may be spaced apart from the camera assembly 420 by the second gap d2, and the fourth portion 454 of the guide plate 450 may be spaced apart from the camera assembly 420 by the third gap d3 greater than the second gap d2. For example, the left portion of the guide plate 450 with respect to the optical axis L of the lens 431 may form the second gap d2, and the right portion of the guide plate 450 with respect to the optical axis L of the lens 431 may form the third gap d3 greater than the second gap d2. In various embodiments, the second gap d2 may be smaller than the first gap d1, and the third gap d3 may be greater than the first gap d1.

Referring to FIGS. 6 and 7, the camera assembly 420 may rotate together with the lens 431 and the image sensor 439. That is, relative positions of the lens 431 and the image sensor 439 may be maintained when the camera assembly 420 rotates. Accordingly, the focus of an image may be maintained when an image stabilization function is performed.

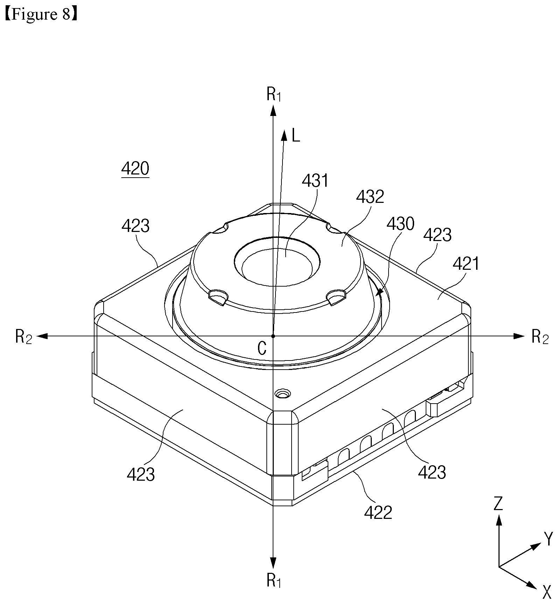

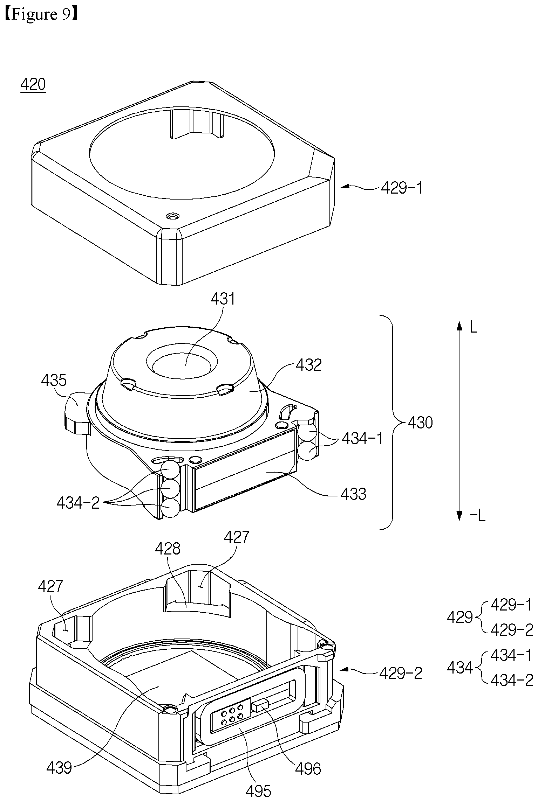

FIG. 8 is a perspective view of the camera assembly of the camera module according to an embodiment. FIG. 9 is an exploded perspective view of the camera assembly of the camera module according to an embodiment.

In an embodiment, the camera assembly 420 may include a lens carrier 430, the second camera housing 429, a third magnetic body 433, a third coil 495, a third sensor 496, and a plurality of balls 434. At least one of components of the camera assembly 420 according to an embodiment is the same as, or similar to, at least one of the components of the camera module 400 of FIGS. 4 and 5. Therefore, repetitive descriptions will hereinafter be omitted.

In an embodiment, the second camera housing 429 may form an inner space in which the lens carrier 430 is accommodated. For example, the second camera housing 429 may include an upper housing 429-1 and a lower housing 429-2. In an embodiment, the upper housing 429-1 may have an opening formed therein. In an embodiment, the image sensor 439 may be disposed in the lower housing 429-2. In various embodiments, the opening may be aligned with an opening region (e.g., the opening region 459 of FIG. 5) of a guide plate (e.g., the guide plate 450 of FIG. 5). In various embodiments, the opening may be aligned with the lens 431. In various embodiments, the lens barrel 432 may protrude outside the second camera housing 429 through the opening.

In an embodiment, the lens carrier 430 may include the lens barrel 432. The lens barrel 432 may include at least one lens 431 therein. The lens barrel 432 may be formed to surround the lens 431. In an embodiment, the lens carrier 430 may be moved (e.g., L/-L directions) with respect to the optical axis L of the lens 431 in the space between the upper housing 429-1 and the lower housing 429-2. The camera module 400 may provide an auto focus function as the lens 431, together with the lens carrier 430, is moved (e.g., the L/-L directions) with respect to the direction of the optical axis L. For example, the camera module 400 may provide an auto focus function by moving the lens 431 in a direction (e.g., the L/-L directions) substantially parallel to the optical axis L of the lens 431.

In an embodiment, the camera assembly 420 may include the third magnetic body 433 and the third coil 495 for moving (e.g., the L/-L directions) the lens carrier 430 with respect to the optical axis L of the lens 431. For example, the third magnetic body 433 may be disposed on a side surface of the lens carrier 430, and the third coil 495 may be disposed on the upper housing 429-1 or the lower housing 429-2 to substantially face the third magnetic body 433. The third magnetic body 433 and the third coil 495 may electromagnetically interact with each other.

In an embodiment, a processor (e.g., the processor 120 of FIG. 1 and/or the image signal processor 260 of FIG. 2) may control movement of the lens carrier 430 of the camera module 400 by controlling an electromagnetic force (e.g., Lorentz force) applied to the third magnetic body 433 by the third coil 495. For example, the processor (e.g., the processor 120 of FIG. 1 and/or the image signal processor 260 of FIG. 2) may control a current flowing through the third coil 495 (e.g., the strength and/or direction of the current) such that the lens carrier 430 moves with respect to the optical axis L.

In an embodiment, the camera assembly 420 may further include the third sensor 496 configured to sense the position of the third magnetic body 433. For example, the third sensor 496 may be disposed on the upper housing 429-1 or the lower housing 429-2. The third sensor 496 may detect the displacement of the lens carrier 430 through the position of the third magnetic body 433 moving together with the lens carrier 430. For example, the third sensor 496 may include a Hall sensor that senses the magnetic force of the third magnetic body 433. The camera module 400 may measure the position of the lens carrier 430, based on a signal sensed by the third sensor 496.

In an embodiment, the third sensor 496 may detect the displacement of the lens carrier 430 and/or the third magnetic body 433, and an electronic device (e.g., the processor 120 of FIG. 1 or the image signal processor 260 of FIG. 2) may provide an auto focus function using the third magnetic body 433 and the third coil 495. For example, the distance between the lens 431 and the image sensor 439 disposed in the second camera housing 429 (e.g., the lower housing 429-2) may be varied as the lens 431, together with the lens carrier 430, is moved (e.g., the L/-L directions) with respect to the direction of the optical axis L. As described above, the electronic device may adjust a focal length by moving the lens carrier 430 depending on the distance from an object.

In an embodiment, the camera assembly 420 may include the plurality of balls 434 disposed between the side surface of the lens carrier 430 and the second camera housing 429. In an embodiment, the plurality of balls 434 may provide a rolling frictional force between the lens carrier 430 and the second camera housing 429 when the lens carrier 430 is moved in the direction of the optical axis L. In the illustrated embodiment, the plurality of balls 434 may include a first plurality of balls 434-1 disposed on one side of the third magnetic body 433 and a second plurality of balls 434-2 disposed on an opposite side of the third magnetic body 433. For example, the first plurality of balls 434-1 and the second plurality of balls 434-2 may be arranged in the direction of the optical axis L of the lens 431. In an embodiment, the first plurality of balls 434-1 may be configured to include a smaller number of balls than the second plurality of balls 434-2. For example, due to the structure (e.g., an inclined edge shape and a chamfered region) of the camera module (e.g., the camera module 400 of FIG. 4), the first plurality of balls 434-1 disposed on the one side may include a smaller number of balls than the second plurality of balls 434-2 disposed on the opposite side.

In an embodiment, to guide movement of the lens carrier 430 in the direction of the optical axis L, the camera assembly 420 may include a guide member 435 and a guide rail 427 in which the guide member 435 is accommodated. The guide member 435 may protrude from a side surface of the lens carrier 430, and the guide rail 427 may be formed on the upper housing 429-1 or the lower housing 429-2 and may have the guide member 435 accommodated therein. For example, the guide rail 427 may be formed on the lower housing 429-2. The guide member 435 may be accommodated in the guide rail 427 and may guide movement (e.g., the L/-L directions) of the lens carrier 430 with respect to the optical axis L.

In an embodiment, the guide rail 427 may extend from a step surface 428 formed on the lower housing 429-2 and may be open in an upper direction. When the lens carrier 430 moves in a lower direction, the step surface 428 may support the guide member 435 to limit a movement range of the lens carrier 430 in the lower direction (e.g., the -L direction).

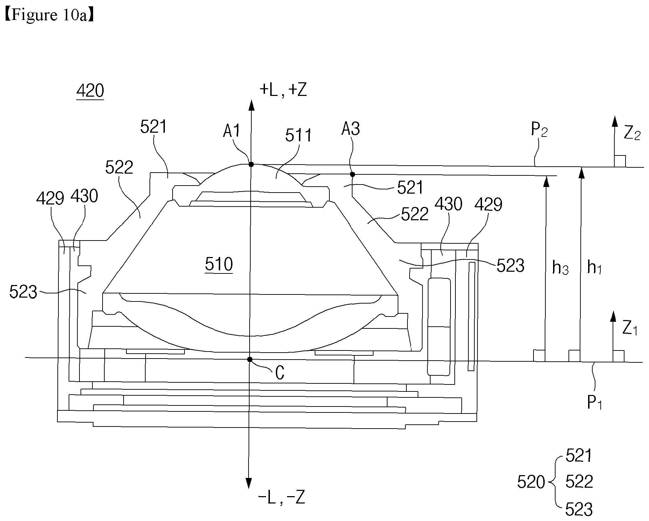

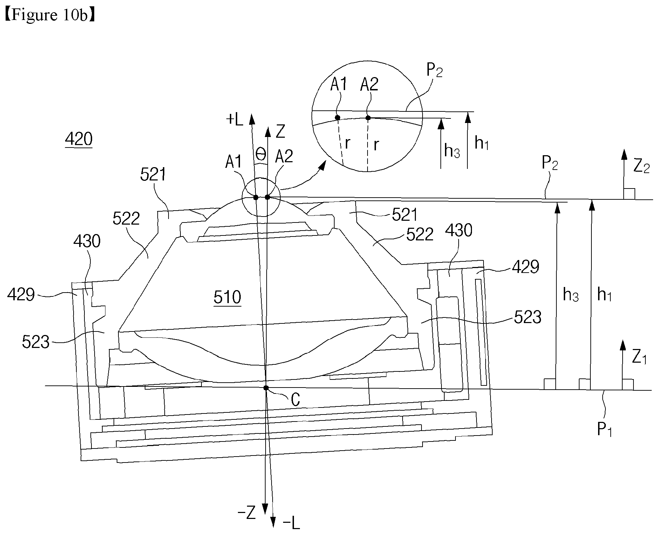

FIG. 10 is a view illustrating rotation of the camera assembly of the camera module according to an embodiment.

In an embodiment, the camera assembly 420 may include one or more lenses 510 (e.g., the lens 431 of FIG. 9), a lens barrel 520 surrounding the one or more lenses 510, the lens carrier 430 surrounding the lens barrel 520 (e.g., the lens barrel 432 of FIG. 9), and the second camera housing 429 surrounding the lens carrier 430.

In an embodiment, the camera module 400 may include a default state in which an optical axis L of the lenses 510 is substantially parallel to the Z-axis direction and a rotated state in which the optical axis L of the lenses 510 forms a predetermined angle θ with the Z-axis. In the default state, the Z-axis may coincide with the optical axis L of the lenses 510 in the case in which the Z-axis is an axis extending from the center of rotation C.

In an embodiment, the one or more lenses 510 may include a plurality of lenses. Referring to the drawing, the one or more lenses 510 may extend to the outside from inside the second camera housing 429. In an embodiment, the one or more lenses 510 may include a first lens 511, at least a portion of which protrudes above the lens barrel 520. For example, the first lens may be located outside the second camera housing. For example, when viewed in the direction of the optical axis L, the first lens 511 may be a lens located at the top in the direction of the optical axis L among the one or more lenses 510. For example, the first lens 511 may be a lens furthest from the center of rotation in the Z-axis direction among the plurality of lenses 510. For example, the first lens 511 may include a convex lens.

In an embodiment, at least a portion of the lens barrel 520 may be accommodated in the second camera housing 429, and the remaining portion of the lens barrel 520 may protrude outside the second camera housing 429. In an embodiment, the lens barrel 520 may include a first portion 521 located inside the second camera housing 429 and a second portion 522 extending outside the second camera housing 429 from the first portion 521.

In an embodiment, the second portion 522 may be formed such that the area of a section (e.g., a section perpendicular to the optical axis) of at least part thereof is decreased in the positive direction of the optical axis L. For example, when the lens barrel 520 has a substantially cylindrical shape, the diameter may be decreased in the positive direction L+ of the optical axis L. However, the lens barrel 520 illustrated in this disclosure is not limited to the shape illustrated in the drawing. In an embodiment, the second portion 522 may be formed such that an upper end portion 523 surrounds at least a portion of the first lens 511. Here, the upper end portion 523 may include a portion of the lens barrel 520 that faces the positive direction L+ of the optical axis L.

In various embodiments, a first virtual plane P1 including the center of rotation of the camera assembly 420 and facing the direction of the optical axis L of the lenses 510 may be defined. For example, the normal vector Z1 of the first virtual plane P1 may be substantially parallel to the optical axis L of the lenses 510. Here, a length measured in the Z-axis direction (e.g., the direction of the optical axis in the default state) from the first virtual plane P1 may be defined as a height.

In the illustrated embodiment, when the camera assembly 420 is in the default state, a point having the maximum height in the Z-axis direction from the first virtual plane P1 may be defined as a first point A1. For example, the first point A1 may be defined as a portion of a surface of the first lens 511. The first point A1 may have a first height h1 from the first virtual plane P1. The first point A1 may be formed of, for example, one of a surface, a line, or a point. For example, the first point A1 may include a portion of a convex surface of the convex lens. In various embodiments, the first point A1 of the first lens 511 may include a portion having the maximum radius of rotation from the center of rotation.

In various embodiments, a second virtual plane P2 extending from the first point A1 of the first lens 511 in the direction of a tangent surface may be defined. For example, the first height h1 may be the distance from the first virtual plane P1 to the second virtual plane P2. For example, the normal vector Z2 of the second virtual plane P2 may be substantially parallel to the optical axis L.

In the illustrated embodiment, when the camera assembly 420 is in the rotated state, a point having the maximum height from the first virtual plane P1 may be defined as a second point A2. For example, the second point A2 may be defined as a portion of the surface of the first lens 511. The second point A2 may have a second height h2 in the Z-axis direction from the first virtual plane P1. The second point A2 may be formed of, for example, one of a surface, a line, or a point. For example, the second point A2 may include a portion of the convex surface of the convex lens.

In an embodiment, the second height h2 may be smaller than or equal to the first height h1.

In various embodiments, the radius of rotation of the second point A2 may be substantially the same as the radius of rotation of the first point A1. In the embodiment, the height (e.g., the first height h1) of the first lens 511 in the default state may be substantially the same as the height (e.g., the second height h2) of the first lens 511 in the rotated state. In the embodiment, at least a portion of the surface of the first lens 511 may be formed of any curved surface including the first point A1 and the second point A2, and the center of curvature of the curved surface may substantially coincide with the center of rotation C.

Referring to FIG. 10, the first point A1 may be defined as a point on a surface of the lenses 510 that intersects the Z-axis in the default state. In the default state, the first point A1 may intersect the optical axis L of the lenses 510. The second point A2 may be defined as a point on the surface of the lenses 510 that intersects the Z-axis in the rotated state.

In various embodiments, the radius of rotation of the second point A2 may be smaller than the radius of rotation of the first point A1. In the embodiment, the first lens 511 may have the first height h1 in the default state and may have a height (e.g., the second height h2) smaller than the first height h1 in the rotated state.

In various embodiments, referring to an enlarged view, the second point A2 may be spaced apart from the second virtual plane P2 by a predetermined gap.

In the illustrated embodiment, when the camera assembly 420 is in the rotated state, a third point A3 having the maximum height from the first virtual plane P1 may be defined on the lens barrel 520. The third point A3 may be defined as a portion of the lens barrel 520. For example, the third point A3 may be defined on part of the upper end portion 523 of the lens barrel 520 that surrounds the first lens 511. For example, the third point A3 may be formed of one of a surface, a line, or a point. For example, the third point A3 may include an edge formed between a side surface and an upper surface of the lens barrel 520.

In the illustrated embodiment, the third point A3 may have a third height h3 from the first virtual plane P1 in the default state. The third point A3 may have a fourth height h4 from the first virtual plane P1 in the rotated state. In various embodiments, the third height h3 may be smaller than the first height h1. In various embodiments, the fourth height h4 may be substantially the same as, or smaller than, the first height h1.

In various embodiments, the third point A3 of the lens barrel 520 may include part of the upper end portion of the lens barrel 520 that has the maximum radius of rotation from the center of rotation C.

In various embodiments, the third point A3 of the lens barrel 520 may include part of the upper end portion 523 of the lens barrel 520 that is furthest from the optical axis L.

In various embodiments, the lens barrel 520 may be formed such that in the default state and the rotated state, the lenses 510 further protrude beyond the lens barrel 520 by a predetermined height in the direction of the optical axis L of the lenses 510. For example, in the default state, the third point A3 of the lens barrel 520 and the first point A1 of the lenses 510 may have a first height difference h1-h3. In the rotated state, the third point A3 of the lens barrel 520 and the first point A1 of the lenses 510 may have a second height difference h1-h4. For example, both the first height difference h1-h3 and the second height difference h1-h4 may be greater than or equal to 0. For example, the second height difference h1-h4 may be smaller than the first height difference h1-h3.

In some embodiments, the second height difference h1-h4 may be equal to 0. That is, in the rotated state, the height of the third point A3 may be equal to the height of the first point A1 (h4=h1). In the embodiment, the height of the third point A3 of the lens barrel 520 may be increased by 1^{∗}tanθ when the camera assembly 420 rotates by θ in the default state. In this case, "i" may be defined as the distance from the optical axis L of the lenses 510 to the third point A3 in a direction perpendicular to the optical axis L. The height differences in the rotated state and the default state may be increased as the distance "i" from the optical axis L of the lenses 510 is increased. The height differences in the rotated state and the default state may be increased as the rotation angle θ is increased.

In the embodiment, the lens barrel 520 may be formed such that the first point A1 of the lenses 510 further protrudes beyond the third point A3 of the lens barrel 520 by i^{∗}tanθ. That is, in the case in which the third point A3 of the lens barrel 520 is formed in a lower position than the first point A1 by i^{∗}tanθ, the fourth height h4 of the third point A3 in the rotated state may be substantially the same as the first height h1 of the first point A1 when the camera assembly 420 rotates by θ. That is, the second height difference h4-h1 may be equal to 0.

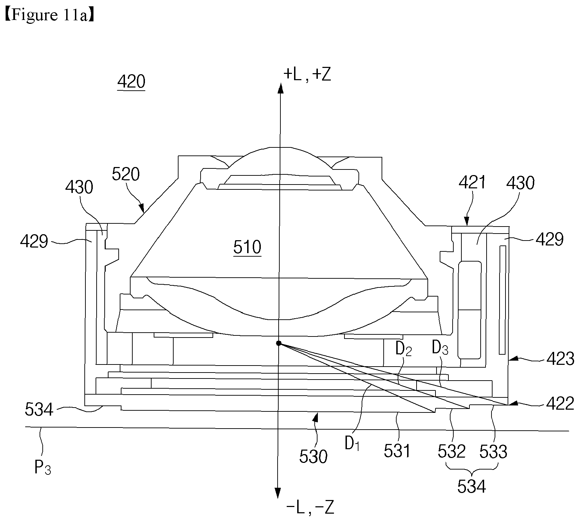

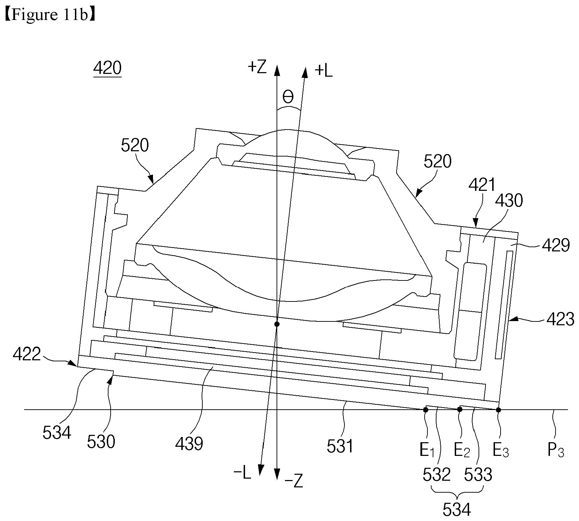

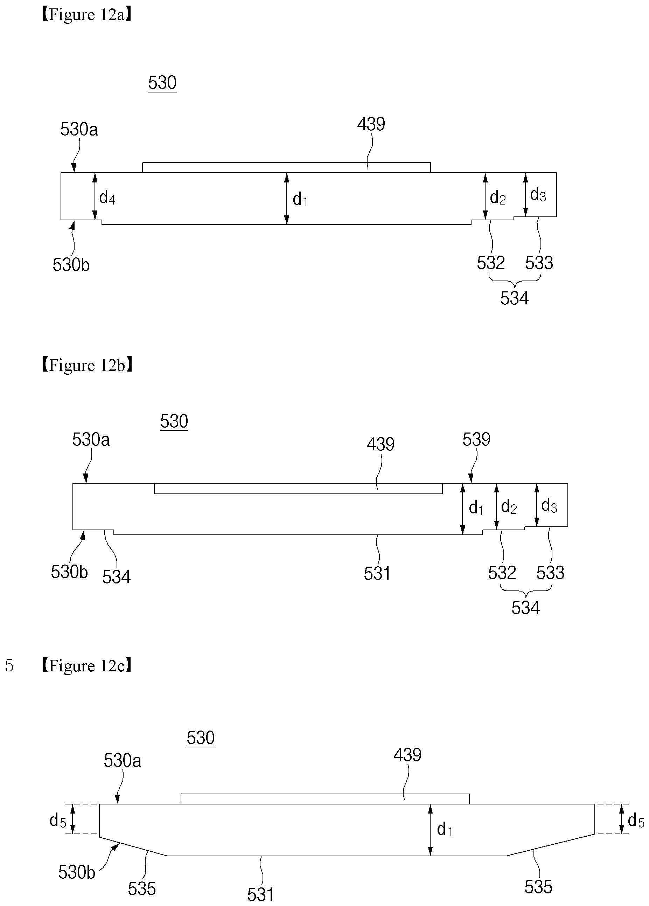

FIG. 11 is a view illustrating rotation of the camera assembly of the camera module according to an embodiment. FIG. 12 is a view illustrating a printed circuit board according to an embodiment. At least one of components of the camera assembly 420 according to an embodiment is the same as, or similar to, at least one of the components of the camera assembly 420 of FIG. 10. Therefore, repetitive descriptions will hereinafter be omitted.

In an embodiment, the camera assembly 420 may include the second camera housing 429 that forms at least a portion of a surface of the camera assembly 420, the one or more lenses 510 (e.g., the lens 431 of FIG. 9), the lens barrel 520 (e.g., the lens barrel 432 of FIG. 9), the lens carrier 430, and the printed circuit board 530.

In an embodiment, the second camera housing 429 may form at least one of an upper surface 421, a lower surface 422, or a side surface 423 of the camera assembly 420.

In an embodiment, the printed circuit board 530 may form an inner space of the camera assembly 420 together with the second camera housing 429. For example, the printed circuit board 530 may form at least a portion of the lower surface of the camera assembly 420.

In an embodiment, the image sensor 439 may be disposed on the printed circuit board 530. The image sensor 439 may be disposed on the printed circuit board 530 so as to be at least partially aligned with the optical axis L of the lenses 510. The image sensor 439 and the printed circuit board 530 may rotate together with the second camera housing 429, the lenses 510, and the lens barrel 520 when the camera assembly 420 rotates. Accordingly, the focus of an image may be maintained even when the camera assembly 420 rotates.

In an embodiment, in a rotated state of the camera assembly 420, the printed circuit board 530 may have different distances from a bottom surface P3. For example, the bottom surface P3 may be a bottom surface of the first camera housing 410, or may be an internal structure (e.g., the printed circuit board 350 or the first support member 342 of FIG. 3) of an electronic device (e.g., the electronic device 300 of FIG. 3). For example, in the rotated state, a portion (e.g., the right portion based on the drawings) of the printed circuit board 530 may be close to the bottom surface P3, and another portion (e.g., the left portion based on the drawings) of the printed circuit board 530 may be far away from the bottom surface P3.

In an embodiment, the printed circuit board 530 may include a first surface 530a facing toward the lens barrel 520 and a second surface 530b facing away from the first surface 530a. The image sensor 439 may be disposed on at least a portion of the first surface 530a.

The printed circuit board 530 may have different thicknesses. For example, the printed circuit board 530 may include a central region 531 on which at least a portion of the image sensor 439 is disposed and a stepped region 534 formed to be stepped with respect to the central region 531 as a region around the central region 531. In various embodiments, the stepped region 534 may include a first stepped region 532 extending stepwise from the central region 531 and a second stepped region 533 extending stepwise from the first stepped region 532.

In various embodiments, the stepped region 534 may be formed on the second surface 530b of the printed circuit board 530. For example, the stepped region 534 may be formed on the second surface 530b such that the distance (e.g., thickness) from the second surface 530b to the first surface 530a is smaller than that in the central region 531.

In various embodiments, the central region 531 and the first stepped region 532 may form a first edge E1. In various embodiments, the first stepped region 532 and the second stepped region 533 may form a second edge E2. In various embodiments, the second stepped region 533 may form a third edge E3 of the printed circuit board 530. In various embodiments, the first edge E1, the second edge E2, and the third edge E3 may be formed on the second surface 530b of the printed circuit board 530.

In the illustrated embodiment, the first edge E1 may have a first radius of rotation D1 from the center of rotation C, and the second edge E2 may have a second radius of rotation D2 from the center of rotation C. The third edge E3 may have a third radius of rotation D3 from the center of rotation C. In an embodiment, the third radius of rotation D3 may be greater than the second radius of rotation D2, and the second radius of rotation D2 may be greater than the first radius of rotation D1.

In an embodiment, the printed circuit board 530 may include the stepped region 534 such that in the rotated state, an edge (e.g., the first edge E1) of the central region 531 forms a first gap from the bottom surface P3 and an edge (e.g., the third edge E3) of the printed circuit board 530 forms a third gap from the bottom surface P3.

In various embodiments, the printed circuit board 530 may be formed such that the first gap and the third gap are substantially the same as each other in the state in which the camera assembly 420 rotates about one rotational axis (e.g., the first rotational axis R1 or the second rotational axis R2 of FIG. 4) passing through the center of rotation C to the maximum. For example, the first edge E1 and the third edge E3 may be included in substantially the same surface. For example, the first edge E1 and the third edge E3 may be substantially included in the bottom surface P3. In this case, the bottom surface P3 may be the bottom surface of the first camera housing 410 in which the camera assembly 420 is accommodated (e.g., a surface of the first camera housing 410 of FIGS. 7 and 8 that faces the -Z-axis direction). In this case, the first camera housing 410 may provide the most compact space necessary and sufficient for a rotation operation of the camera assembly 420.

In various embodiments, in the rotated state, the first edge E1 may have the first gap from the bottom surface P3, the second edge E2 may have a second gap from the bottom surface P3, and the third edge E3 may have the third gap from the bottom surface P3. In this case, the first gap, the second gap, and the third gap may be substantially the same. Alternatively, in various embodiments, the first gap may be greater than the second gap and/or the third gap.

In various embodiments, when the camera assembly 420 moves from a default state to a rotated state, a change in the height of an arbitrary point of the printed circuit board 530 may be related to the distance from the optical axis L of the lenses 510 to the arbitrary point in a direction perpendicular to the optical axis L. For example, the arbitrary point of the printed circuit board 530 may move more in a direction toward the bottom surface P3 as the distance from the optical axis L is increased. Accordingly, the stepped region 534 may be formed in a region relatively far away from the optical axis L to maintain the gap from the bottom surface 534 as small as possible.

Specifically, in an embodiment of the disclosure, the printed circuit board 530 including the first stepped region 532 and the first edge E1 is defined. The first stepped region 532 may be defined by the first edge E1 spaced a first distance "j" apart from a point through which the optical axis L of the lenses 510 passes. In this case, the maximum displacement of the first edge E1 in the Z-axis direction may be derived as -j^{∗}tanθ. That is, the printed circuit board 530 and the bottom surface P3 may be spaced apart from each other by at least j^{∗}tanθ.

In a comparative example, a printed circuit board having no stepped region and including the third edge E3 is defined. In the comparative example, the third edge E3 may be spaced a second distance "i" apart from a point through which the optical axis L of the lenses 510 passes. In this case, the maximum displacement of the third edge E3 in the Z-axis direction may be derived as - i^{∗}tanθ. That is, the printed circuit board 530 and the bottom surface P3 may be spaced apart from each other by at least i^{∗}tanθ.

That is, according to embodiments of the disclosure, the gap between the bottom surface P3 and the printed circuit board 530 may be decreased by Δ = i^{∗}tanθ - j^{∗}tanθ by decreasing the radii of rotation D1, D2, and D3 of the printed circuit board 530 by forming the predetermined stepped regions 532, 533, and 534 on the printed circuit board 530.

In various embodiments, the camera assembly 420 may be formed to be asymmetrical when viewed with respect to the optical axis L of the lenses 510. For example, the right portion of the camera assembly 420 based on the drawings may have a greater distance from the optical axis L of the lenses 510 than the left portion of the camera assembly 420. Likewise, the right portion of the printed circuit board 530 with respect to the optical axis L of the lenses 510 may extend longer than the left portion of the printed circuit board 530. That is, when the camera assembly 420 moves from the default state to the rotated state, the right portion may move more toward the bottom surface P3 than the left portion. Accordingly, the printed circuit board 530 according to the illustrated embodiment may include one stepped region 534 formed on the left portion and two stepped regions (e.g., the first stepped region 532 and the second stepped region 533) formed on the right portion.

In various embodiments, referring to FIG. 12C, the printed circuit board 530 may include, on the first surface 530a, a recess 539 or an opening in which the image sensor 439 is accommodated. Accordingly, the camera module 400 may be made compact by locating the printed circuit board 530 closer to the bottom surface P3.

In various embodiments, as illustrated in FIGs. 12A and 12C, the image sensor 439 may be mounted in the form of a chip on film (COF).

In various embodiments, at least a portion of the image sensor 439 may be formed of a curved surface. For example, the curved surface may be formed such that, when viewed with respect to the image sensor 439, the center of curvature is located in the direction in which the lenses 510 are located (e.g., in an upper direction with respect to the drawings). For example, the image sensor 493 may be formed to be convex in a lower direction based on the drawings (e.g., in a direction toward the bottom surface P3). In various embodiments, the center of curvature of the curved surface may coincide with the center of rotation C.

In various embodiments, referring to FIG. 12C, the printed circuit board 530 may include the central region 531 and inclined regions 535. The inclined regions 535 may be regions obliquely extending from the central region 531 when viewed in a section. The inclined regions may be formed such that the second surface 530b of the printed circuit board 530 is inclined upward in the positive direction L+ of the optical axis L. In various embodiments, the inclined regions 535 may have a smaller thickness than the central region 531. The inclined regions 535 may have a decreasing thickness from the central region 531 toward the periphery of the printed circuit board 530.

In various embodiments, the printed circuit board 530 may include at least one conductive layer. In this case, the central region 531 may include more conductive layers than the stepped region 534 or the inclined regions 535. For example, the central region 531 may include six conductive layers, and the stepped region 534 or the inclined regions 535 may include two or four conductive layers. For example, the central region 531 may include four conductive layers, and the stepped region 534 or the inclined regions 535 may include two conductive layers. For example, the central region 531 may include six conductive layers, the first stepped region 532 may include four conductive layers, and the second stepped region 533 may include two conductive layers.

In the embodiment illustrated in FIG. 12A, the printed circuit board 530 may be configured such that the central region 531 includes four conductive layers and each of the first stepped region 532 and the second stepped region 533 includes two conductive layers. For example, the central region 531 may have a thickness of about 0.4 mm. For example, the first stepped region 532 may have a thickness of about 0.325 mm. For example, the second stepped region 533 may have a thickness of about 0.25 mm.

In the embodiment illustrated in FIG. 12B, the printed circuit board 530 may be configured such that the central region 531 includes six conductive layers and each of the first stepped region 532 and the second stepped region 533 includes four conductive layers. For example, the first stepped region 532 may have a thickness of about 0.525 mm. For example, the second stepped region 533 may have a thickness of about 0.45 mm. For example, the central region 531 may have a thickness of about 0.6 mm. For example, the thickness from the second surface 530b to the bottom surface of the recess 539 may be about 0.4 mm. In various embodiments, the recess 539 may be formed by forming an opening in two conductive layers among the six conductive layers included in the central region 531.

A camera module 400 according to embodiments of the disclosure may include a camera housing 410 and a camera assembly 420, at least a portion of which is disposed in the camera housing 410. The camera assembly 420 may be configured to rotate about a center of rotation C formed therein and may include a lens 510, a lens barrel 520 that surrounds the lens 510, and an image sensor 439. The camera module 400 may include a default state in which an optical axis L of the lens 510 is parallel to a z-axis and a rotated state in which the optical axis L of the lens 510 forms a predetermined angle with the z-axis. The lens 510 may have a first height h1 in a direction of the z-axis from the center of rotation C in the default state. The lens barrel 520 may have a third height h3 smaller than the first height h1 in the direction of the z-axis from the center of rotation C in the default state and the rotated state.

In various embodiments, the lens barrel 520 may be formed such that in the default state, at least a portion of the lens 510 further protrudes beyond the lens barrel 520 in a direction of the optical axis L of the lens 510.

In various embodiments, the camera module 400 may include at least one rotational axis R1 and R2, and the center of rotation C may be a point at which the at least one rotational axis r1 and R2 and the optical axis L of the lens 510 intersect each other.

In various embodiments, the predetermined angle may range from 0 degrees to 10 degrees.

In various embodiments, the lens 510 may include a convex lens.

In various embodiments, a surface of the lens 510 may include a first point A1 that intersects the z-axis in the default state and a second point A2 that intersects the z-axis in the rotated state, and in the rotated state, the second point A2 may have a second height h2 smaller than or equal to the first height h1.

In various embodiments, the lens 510 may be formed such that a distance from the center of rotation C to the first point A1 and a distance from the center of rotation C to the second point A2 are substantially the same as each other.

In various embodiments, at least a portion of the surface of the lens 510 may be formed of a curved surface including the first point A1 and the second point A1, and a center of curvature of the curved surface may substantially coincide with the center of rotation C.

In various embodiments, the lens 510 may include a plurality of lenses including a first lens 510 furthest from the center of rotation C in a direction of the optical axis L. The camera assembly 420 may further include a second camera housing 410 in which the plurality of lenses 510 and at least a portion of the lens barrel 520 are accommodated. The lens barrel 520 may include a first portion 521 disposed in the second camera housing 410 and a second portion 522 that extends outside the second camera housing 410 from the first portion 521 and surrounds at least a portion of the first lens 510. The first lens 510 may be formed such that at least a portion of a surface further protrudes beyond the lens barrel 520 in the direction of the z-axis in the default state and is located in a higher position than the lens barrel 520 in the direction of the z-axis in the rotated state.

In various embodiments, the camera assembly 420 may further include a printed circuit board 530 that is disposed under the lens barrel 520 and that includes a first surface 530a that faces toward the lens 510 and a second surface 530b that faces away from the first surface 530a, and the image sensor 439 may be disposed on a portion of the first surface 530a of the printed circuit board 530.

In various embodiments, the printed circuit board 530 may include a first region 531 located at a first distance from the optical axis L of the lens 510 and formed to have a first thickness and a second region 534 located at a second distance greater than the first distance from the optical axis of the lens 510 and formed to have a second thickness smaller than the first thickness.

In various embodiments, the printed circuit board 530 may include a central region 531, at least a portion of which is aligned with the optical axis L of the lens 510, and a stepped region 534 that extends stepwise from the central region 531, and the stepped region 534 may be formed on the second surface 530b of the printed circuit board 530.

In various embodiments, the stepped region 534 may include a first edge E1 formed between the central region 531 and the stepped region 534 and a second edge E3 being an edge of the printed circuit board 530. In the rotated state, the first edge E1 may be spaced apart from a bottom surface of the camera housing 410 by a first gap, and in the rotated state, the second edge E3 may be spaced apart from the bottom surface of the camera housing 410 by a second gap greater than or equal to the first gap.

An electronic device 300 according to embodiments of the disclosure may include a housing 310 including a surface, at least a portion of which faces a z-axis direction and a camera module 400 disposed in the housing 310 to receive external light through the surface of the housing 310. The camera module 400 may include a camera housing 410 and a camera assembly 420, at least a portion of which is disposed in the camera housing 410. The camera assembly 420 may be configured to rotate about a center of rotation C formed therein and may include a plurality of lenses 510, a lens barrel 520 that surrounds the plurality of lenses 510, and an image sensor 439. The camera module 400 may include a default state in which an optical axis L is parallel to a z-axis and a rotated state in which the optical axis of the lenses 510 forms a predetermined angle with the z-axis. The plurality of lenses 510 may include a first lens 510 furthest from the center of rotation in a direction of the optical axis of the lenses 510. The first lens 510 may be formed such that at least a portion of a surface is located in a higher position than the lens barrel in the z-axis direction in the default state and the rotated state.

In various embodiments, the first lens 510 may include a first point A1 that intersects the z-axis in the default state and a second point A2 that intersects the z-axis in the rotated state, and a height of the second point A2 in the z-axis direction in the rotated state may be smaller than a height of the first point A1 in the z-axis direction in the default state.

In various embodiments, the camera assembly 420 may further include a printed circuit board 530 that is disposed under the lens barrel 520 and that includes a first surface 530a that faces toward the lenses 510 and a second surface 530b that faces away from the first surface 530a, and the image sensor 439 may be disposed on a portion of the first surface 530a of the printed circuit board 530.

In various embodiments, the printed circuit board 530 may include a first region 531 located at a first distance from the optical axis of the lenses 510 and formed to have a first thickness and a second region 534 located at a second distance greater than the first distance from the optical axis of the lenses and formed to have a second thickness smaller than the first thickness.

In various embodiments, the printed circuit board 530 may include a central region 531, at least a portion of which is aligned with the optical axis L of the lenses 510, and a stepped region 534 that extends stepwise from the central region 531, and the stepped region 534 may be formed on the second surface 530b of the printed circuit board 530.

In various embodiments, the stepped region 534 may include a first edge E1 formed between the central region 531 and the stepped region 534 and a second edge E3 being an edge of the printed circuit board 530. In the rotated state, the first edge E1 may be spaced apart from a bottom surface P3 of the camera housing 410 by a first gap, and in the rotated state, the second edge E3 may be spaced apart from the bottom surface P3 of the camera housing 410 by a second gap greater than or equal to the first gap.

A camera module 400 according to embodiments of the disclosure may include a camera housing including an upper surface that has an opening formed therein and faces a z-axis and a lower surface that faces a -z-axis and a camera assembly, at least a portion of which is disposed in the camera housing, and the camera assembly may include a lens and a lens barrel that surrounds the lens. The lens and at least a portion of the lens barrel may protrude through the opening formed in the upper surface. The camera module may include a default state in which an optical axis of the lens is parallel to the z-axis and a rotated state in which the optical axis of the lens forms a predetermined angel with the z-axis. The camera module may have a first height from the lower surface to a surface of the lens in a direction of the z-axis in the default state. The camera module may have a second height smaller than or equal to the first height in the direction of the z-axis from the lower surface in the rotated state.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

According to the situation, the expression "adapted to or configured to" used in this disclosure may be used interchangeably with, for example, the expression "suitable for", "having the capacity to", "adapted to", "made to", "capable of", or "designed to" in hardware or software. The expression "a device configured to" may mean that the device is "capable of" operating together with another device or other components. For example, a "processor set to (or configured to) perform A, B, and C" may mean a dedicated processor (e.g., an embedded processor) for performing corresponding operations or a generic-purpose processor (e.g., a CPU or an AP) that performs corresponding operations by executing one or more programs stored in a memory device (e.g., the memory 130).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. The "module" may be implemented mechanically or electronically and may include, for example, an application-specific integrated circuit (ASIC) chip, field-programmable gate arrays (FPGAs), or a programmable-logic device for performing some operations, which are known or will be developed.

At least a part of an apparatus (e.g., modules or functions thereof) or a method (e.g., operations) according to various embodiments may be implemented by instructions stored in computer-readable storage media (e.g., the memory 130) in the form of a program module. The instructions, when executed by a processor (e.g., the processor 120), may cause the processor to perform functions corresponding to the instructions. The computer-readable storage media may include a hard disk, a floppy disk, a magnetic media (e.g., a magnetic tape), an optical media (e.g., CD-ROM, DVD, magneto-optical media (e.g., a floptical disk)), an embedded memory, and the like. The instructions may include a code made by a compiler or a code executable by an interpreter.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A camera module comprising:
a camera housing; and
a camera assembly, at least a portion of which is disposed in the camera housing, the camera assembly being configured to rotate about a center of rotation formed therein, wherein the camera assembly includes a lens, a lens barrel configured to surround the lens, and an image sensor,
wherein the camera module includes a default state in which an optical axis of the lens is parallel to a z-axis and a rotated state in which the optical axis of the lens forms a predetermined angle with the z-axis,
wherein the lens has a first height in a direction of the z-axis from the center of rotation in the default state, and
wherein the lens barrel has a third height smaller than the first height in the direction of the z-axis from the center of rotation in the default state and the rotated state.

2. The camera module of claim 1, wherein the lens barrel is formed such that in the default state, at least a portion of the lens further protrudes beyond the lens barrel in a direction of the optical axis of the lens.

3. The camera module of claim 1, wherein the camera module includes at least one rotational axis, and
wherein the center of rotation is a point at which the at least one rotational axis and the optical axis of the lens intersect each other.

4. The camera module of claim 1, wherein the predetermined angle ranges from 0 degrees to 10 degrees.

5. The camera module of claim 1, wherein the lens includes a convex lens.

6. The camera module of claim 1, wherein a surface of the lens includes a first point configured to intersect the z-axis in the default state and a second point configured to intersect the z-axis in the rotated state, and
wherein in the rotated state, the second point has a second height smaller than or equal to the first height.

7. The camera module of claim 6, wherein the lens is formed such that a distance from the center of rotation to the first point and a distance from the center of rotation to the second point are substantially the same as each other.

8. The camera module of claim 7, wherein at least a portion of the surface of the lens is formed of a curved surface including the first point and the second point, and
wherein a center of curvature of the curved surface substantially coincides with the center of rotation.

9. The camera module of claim 1, wherein the lens includes a plurality of lenses including a first lens furthest from the center of rotation in a direction of the optical axis,
wherein the camera assembly further includes a second camera housing in which the plurality of lenses and at least a portion of the lens barrel are accommodated,
wherein the lens barrel includes a first portion disposed in the second camera housing and a second portion configured to extend outside the second camera housing from the first portion and surround at least a portion of the first lens, and
wherein the first lens is formed such that at least a portion of a surface further protrudes beyond the lens barrel in the direction of the z-axis in the default state and is located in a higher position than the lens barrel in the direction of the z-axis in the rotated state.

10. The camera module of claim 1, wherein the camera assembly further includes a printed circuit board disposed under the lens barrel and including a first surface configured to face toward the lens and a second surface configured to face away from the first surface, and
wherein the image sensor is disposed on a portion of the first surface of the printed circuit board.

11. The camera module of claim 10, wherein the printed circuit board includes a first region located at a first distance from the optical axis of the lens and formed to have a first thickness and a second region located at a second distance greater than the first distance from the optical axis of the lens and formed to have a second thickness smaller than the first thickness.

12. The camera module of claim 10, wherein the printed circuit board includes a central region, at least a portion of which is aligned with the optical axis of the lens, and a stepped region configured to extend stepwise from the central region, and
wherein the stepped region is formed on the second surface of the printed circuit board.

13. The camera module of claim 12, wherein the stepped region includes a first edge formed between the central region and the stepped region and a second edge being an edge of the printed circuit board,
wherein in the rotated state, the first edge is spaced apart from a bottom surface of the camera housing by a first gap, and
wherein in the rotated state, the second edge is spaced apart from the bottom surface of the camera housing by a second gap greater than or equal to the first gap.

14. An electronic device comprising:
a housing including a surface, at least a portion of which faces a z-axis direction; and
a camera module disposed in the housing to receive external light through the surface of the housing,
wherein the camera module includes:
a camera housing; and
a camera assembly, at least a portion of which is disposed in the camera housing, the camera assembly being configured to rotate about a center of rotation formed therein, wherein the camera assembly includes a plurality of lenses, a lens barrel configured to surround the plurality of lenses, and an image sensor,
wherein the camera module includes a default state in which an optical axis is parallel to a z-axis and a rotated state in which the optical axis of the lenses forms a predetermined angle with the z-axis,
wherein the plurality of lenses include a first lens furthest from the center of rotation in a direction of the optical axis of the lenses, and
wherein the first lens is formed such that at least a portion of a surface is located in a higher position than the lens barrel in the z-axis direction in the default state and the rotated state.

15. The electronic device of claim 14, wherein the first lens includes a first point configured to intersect the z-axis in the default state and a second point configured to intersect the z-axis in the rotated state, and
wherein a height of the second point in the z-axis direction in the rotated state is smaller than a height of the first point in the z-axis direction in the default state.
